# FASCICULE DE BREVET EUROPEEN

(11) **EP 3 764 600 B1**
(45) Date de publication et mention de la délivrance du brevet: **10.12.2025**
(21) Numéro de dépôt: 20184475.0
(22) Date de dépôt: 07.07.2020
(51) Int. Cl.: H04L 12/28, G05B 15/02

(54) **DISPOSITIF AUTONOME DE GESTION D'UN ESPACE**
AUTONOME VORRICHTUNG ZUR VERWALTUNG EINES RAUMS
STANDALONE DEVICE FOR MANAGING A SPACE

(30) Priorité: 09.07.2019 FR 1907684
(43) Date de publication de la demande: 13.01.2021
(73) Titulaire: Legrand France, 87000 Limoges (FR); Legrand SNC, 87000 Limoges (FR)
(72) Inventeur: BEBIEN, William, 87350 PANAZOL (FR); DEMURGER, Victorien, 71170 SAINT IGNY DE ROCHE (FR); SUCHAUD, Nicolas, 87000 LIMOGES (FR); SABOURDY, Alain, 87000 LIMOGES (FR)
(74) Mandataire: Cabinet Camus Lebkiri

(56) Documents cités:
- WO-A1-2016/148651
- US-A1- 2010 124 357
- US-A1- 2016 095 188
- US-A1- 2018 077 778

## Description

### DOMAINE TECHNIQUE DE L'INVENTION

Le domaine technique de l'invention est celui de la gestion des espaces dans les bâtiments, en particulier dans les bâtiments occupés par les activités du secteur tertiaire.

La présente invention concerne un dispositif autonome de gestion d'un espace.

### ARRIERE-PLAN TECHNOLOGIQUE DE L'INVENTION

Avec la démocratisation des espaces de « coworking » (selon la dénomination anglo-saxonne pour « cotravail ») et des bureaux partagés, c'est-à-dire des bureaux non attribués individuellement dans les espaces de bureaux partagés, la gestion des espaces est devenue un domaine clé afin de maitriser les dépenses énergétiques et de fonctionnement.

Par exemple, dans les espaces de bureaux partagés (aussi appelés « open-spaces » selon la dénomination anglo-saxonne), il est devenu courant de contrôler les dispositifs lumineux tels que les plafonniers automatiquement en fonction de la présence de personnes. Ce contrôle est réalisé par des dispositifs de contrôle comprenant généralement un module de détection pyroélectrique, à ultrasons, ou, de manière moins répandue, hyperfréquence ou laser. Lorsqu'un mouvement est détecté, le dispositif contrôle alors l'allumage de l'éclairage pour une période donnée. Dès qu'un mouvement est détecté, cette période est renouvelée. Lorsqu'aucun mouvement n'a été détecté durant une période, le dispositif lumineux est éteint. Cela permet une économie d'énergie, par exemple en fin de journée lorsque l'open-space est vide, et permet d'éviter les cas où la dernière personne quittant la salle oublie d'éteindre la lumière.

Le contrôle de la lumière peut être effectué par exemple en utilisant le protocole DALI (selon la dénomination anglo-saxonne « Digital Addressable Lighting Interface » pour « Interface Lumineuse Numérique Adressable »), permettant d'adresser individuellement 64 dispositif lumineux via un bus de communication à deux fils.

D'autres dispositifs peuvent utiliser le protocole de communication normalisé KNX, chaque dispositif d'un réseau KNX possédant un microprocesseur qui peut envoyer des messages aux autres dispositifs et recevoir des messages des autres dispositifs du réseau KNX. Un autre protocole utilisé peut aussi être le protocole Ethernet, permettant la communication entre les dispositifs du réseau.

Pour une meilleure gestion des espaces, notamment de l'occupation des salles et bureaux, des dispositifs permettent de mesurer le taux d'occupation d'une pièce. Ces dispositifs embarquent le plus souvent une caméra, ou un bolomètre, et ne contrôlent pas d'autres dispositifs électriques : ils envoient sur un réseau les images captées. Ainsi, dans la plupart des dispositifs de contrôle actuels, l'intelligence est déportée vers un serveur, qui réalise les traitements nécessaires, par exemple du traitement d'images dans le cas d'une caméra. Une fois le taux d'occupation connu au niveau du serveur, il est possible pour un utilisateur de savoir si une pièce est occupée ou non à distance. A la suite des traitements par le serveur, ce dernier peut alors envoyer une commande à un dispositif lumineux par exemple, afin que celui-ci s'éteigne si le taux d'occupation calculé est nul.

Ces envois d'images et de commandes sur le réseau et donc cette intelligence déportée impliquent une utilisation importante de la bande passante.

De plus, les dispositifs de l'art antérieur ne permettent pas de piloter plusieurs dispositifs électriques tout en mesurant le taux d'occupation de manière autonome.

Des systèmes tels que ceux mentionnés ci-dessus sont décrits, par exemple, dans l'un quelconque des documents de l'état de la technique suivants :

US 2018/077778 A1 (VANGEEL JURGEN MARIO [BE] ET AL) 15 mars 2018 (2018-03-15), US 2016/095188 A1 (VERBERKT MARK HENRICUS [NL] ET AL) 31 mars 2016 (2016-03-31), WO 2016/148651 A1 (UNIV NANYANG TECH [SG]; UNIV CALIFORNIA [US]) 22 septembre 2016 (2016-09-22), US 2010/124357 A1 (HAMPAPUR ARUN [US] ET AL) 20 mai 2010 (2010-05-20)

Il existe donc un besoin de contrôler un dispositif électrique de manière intelligente de manière simple, fiable et simple d'installation.

### RESUME DE L'INVENTION

L'invention offre une solution aux problèmes posés précédemment en proposant un dispositif de gestion des espaces autonome, capable de mesurer le taux d'occupation en interne et plusieurs paramètres environnementaux, et de contrôler un dispositif électrique en fonction de ces mesures, tout en informant un utilisateur en temps réel sur l'espace qu'il souhaite utiliser ou qu'il utilise.

Un aspect de l'invention concerne un dispositif autonome de gestion d'un espace comprenant un boitier, au moins un processeur et au moins une interface réseau logé dans le boitier, caractérisé en ce que le dispositif autonome comprend :
- une pluralité de capteurs environnementaux fixés au boitier,
- au moins un capteur d'occupation fixé au boitier,
et en ce que :
- le processeur est configuré pour :
   - définir au moins une zone de détection dans l'espace,
   - calculer un taux d'occupation de chaque zone de détection en fonction de données issues du au moins un capteur d'occupation,
   - contrôler un dispositif électrique de l'espace en fonction de données issues de la pluralité de capteurs environnementaux et du taux d'occupation de chaque zone de détection,
- l'interface réseau est configurée pour envoyer à travers un réseau les données issues de la pluralité de capteurs environnementaux, l'état du dispositif électrique de l'espace et le taux d'occupation de chaque zone de détection calculé par le processeur.

Grâce à l'invention, il est possible de contrôler de manière autonome un dispositif électrique tel qu'un luminaire, la ventilation et/ou la climatisation d'une pièce en se basant sur les mesures réalisées par les capteurs du dispositif. Ainsi, par exemple lorsqu'un capteur environnemental est un capteur de qualité de l'air de l'espace, par exemple un capteur de CO2, a mesuré une qualité de l'air inférieur à un seuil, le dispositif peut contrôler la ventilation en augmentant son débit pour renouveler l'air de l'espace. Aussi, par exemple, lorsque la température mesurée par un capteur de température est supérieure à un seuil prédéterminé, le dispositif peut contrôler la climatisation en augmentant sa puissance pour diminuer la température. Aussi, par exemple, lorsque la luminosité mesurée par un capteur de luminosité est inférieure à un seuil, le dispositif peut contrôler un luminaire pour augmenter la lumière dans l'espace. Cela est avantageusement réalisé par un unique dispositif, sans encombrer le réseau auquel il est relié, le contrôle des dispositifs électriques étant réalisé par le processeur du dispositif autonome de gestion de l'espace de l'invention.

Le dispositif peut être adapté à répondre à une requête d'un utilisateur concernant les données des capteurs. Cela permet à un utilisateur souhaitant réserver l'espace géré par le dispositif autonome de connaître l'état de l'espace, par exemple s'il est occupé et par combien de personnes, s'il y fait chaud ou froid, si la qualité de l'air y est bonne etc., grâce à l'interface réseau permettant d'envoyer ces informations issues des mesures des capteurs environnementaux à travers un réseau.

Le fait que le dispositif soit autonome permet de réaliser les calculs et traitements en local, grâce à son processeur, afin de ne pas encombrer le réseau inutilement. Cela permet de connecter le dispositif autonome de gestion de l'espace objet de l'invention à un réseau possédant un débit moindre et donc moins coûteux que les dispositifs de l'état de l'art.

Par exemple, concernant le taux d'occupation, le dispositif autonome de gestion d'un espace n'envoie que le résultat du traitement des images du capteur d'occupation par son processeur, c'est-à-dire le taux d'occupation calculé, à travers le réseau. Ainsi, aucune donnée lourde du capteur de détection de personnes ne transite sur le réseau, permettant d'utiliser moins de bande passante. Un autre aspect de l'autonomie du dispositif autonome de gestion d'un espace est qu'il contrôle des dispositifs électriques en fonction des mesures des capteurs environnementaux qu'il comprend et du taux d'occupation calculé en interne. Ainsi, il comprend toute l'intelligence en local et encombre d'autant moins le réseau qu'il n'a pas besoin de faire de requête auprès d'un serveur pour que ce serveur commande des dispositifs électriques. Le fait de contrôler des dispositifs électriques en fonction des mesures des capteurs environnementaux qu'il comprend et du taux d'occupation calculé en interne permet en outre de diminuer la consommation électrique puisque ce dernier est moins puissant qu'un ordinateur de réseau d'établissement et en outre diminue voire élimine le risque de beug par rapport à un ordinateur qui reçoit par un serveur des données de différents caméras ou capteurs environnementaux de différents espaces.

Avantageusement, le processeur du dispositif autonome de gestion d'un espace selon l'invention peut définir des zones de détection dans l'espace. Cela est particulièrement intéressant dans le cas d'un espace de cotravail, d'un open-space, d'un ensemble de bureaux, ou encore de sanitaires par exemple. En effet, le dispositif autonome de gestion de l'espace peut adapter la consommation énergétique en ne contrôlant que les dispositifs électriques, par exemple les luminaires d'une zone de l'espace occupée par des personnes, et en éteignant ou diminuant la puissance des dispositifs électriques, par exemple en éteignant les luminaires des autres zones où personne n'est présent. En outre, cela permet d'avoir une granularité plus fine dans les informations d'occupation de l'espace géré, notamment dans les open-spaces et dans les espaces de cotravail, permettant à un utilisateur de ne réserver qu'un bureau au sein d'un open-space ou d'une salle de cotravail plutôt que de réserver la salle entière. Cette granularité a un avantage dans la gestion des espaces en permettant une vision fine de l'occupation des zones et donc de pouvoir réorganiser la disposition d'une salle si certains bureaux sont moins utilisés que d'autres, afin de mieux répartir les ressources. Cela peut aussi permettre de connaître le nombre de passages dans certains sanitaires au sein d'un bloc de sanitaires et de savoir lesquels ont été les plus utilisés afin de savoir quels sanitaires sont à nettoyer en priorité et d'y allouer plus de ressources de nettoyage par exemple. Un autre avantage se trouve dans l'application du dispositif autonome à la gestion d'une boutique, permettant une meilleure expérience d'achats pour les clients de la boutique, notamment par le contrôle de la luminosité et la ventilation en fonction de la situation géographique d'un client au sein de la boutique, et en permettant de remonter sur un réseau les informations d'occupation de la boutique divisée en zones, afin de connaître par exemple les vitrines les plus attractives au sein de la boutique.

Outre les caractéristiques qui viennent d'être évoquées dans le paragraphe précédent, le dispositif autonome de gestion d'un espace selon un aspect de l'invention peut présenter une ou plusieurs caractéristiques complémentaires parmi les suivantes, considérées individuellement ou selon toutes les combinaisons techniquement possibles :
- Le taux d'occupation pour chaque zone de présence est calculé par le processeur par traitement d'images issues du capteur d'occupation.
- le dispositif autonome de gestion d'un espace est adapté à commander directement un dispositif de commande d'un dispositif électrique lumineux pour contrôler le dispositif électrique du dispositif électrique lumineux pour varier ou allumer ou éteindre la luminosité dans une zone de détection lorsqu'une occupation est détectée dans la zone de détection et en ce qu'un des capteurs environnementaux est un capteur de luminosité, le dispositif de gestion permettant de maintenir une luminosité prédéfinie en fonction d'une valeur de luminosité prédéfinie et de la mesure du capteur .
- le dispositif autonome de gestion d'un espace est adapté à commander un dispositif de commande d'un dispositif électrique lumineux pour contrôler le dispositif électrique du dispositif électrique lumineux pour éteindre ou baisser la luminosité du dispositif électrique lumineux dans une zone de détection lorsqu'aucune occupation n'est détectée dans la zone de détection ou lorsqu'un capteur environnemental de la pluralité de capteurs environnementaux mesure une luminosité supérieure à une valeur de luminosité prédéfinie de manière à maintenir une luminosité prédéfinie.
- le dispositif autonome de gestion d'un espace est adapté à commander un dispositif de commande de débit pour contrôler le dispositif électrique d'un dispositif électrique de ventilation pour varier la puissance du dispositif électrique de ventilation dans une zone de détection lorsqu'une occupation est détectée dans la zone de détection et/ou qu'un capteur environnemental de la pluralité de capteurs environnementaux mesure une qualité de l'air et compare la mesure à une qualité de l'air prédéfinie de manière à maintenir une qualité de l'air prédéfinie.
- un des capteurs environnementaux est un capteur de température, le dispositif autonome de gestion d'un espace est adapté à commander un dispositif de commande de climatisation pour contrôler le dispositif électrique d'une climatisation pour baisser la température d'une zone de détection lorsque le capteur de température mesure une température supérieure à une température prédéfinie dans cette zone de détection et pour augmenter la température de la zone de détection lorsque le capteur de température mesure une température inférieure de manière à maintenir une température prédéfinie.
- Le dispositif autonome de gestion d'un espace est configuré pour piloter plusieurs dispositifs électriques parmi le dispositif électrique d'un luminaire, le dispositif électrique de ventilation, le dispositif électrique de climatisation qui sont décrits précédemment et comprend les différents capteurs environnementaux correspondant décrit précédemment.
- Le dispositif autonome de gestion d'un espace est configuré pour piloter un dispositif électrique d'une zone de détection lorsque le taux d'occupation de la zone de détection calculé par le processeur est supérieur à un taux d'occupation de la zone de détection prédéfini.
- Le dispositif autonome de gestion d'un espace est configuré pour envoyer, via l'interface réseau, les données issues des capteurs environnementaux, l'état du dispositif électrique de l'espace et le taux d'occupation périodiquement.
- Le processeur est configuré pour calculer le taux d'occupation de chaque zone de détection périodiquement.
- Le dispositif autonome de gestion d'un espace comprend en outre une commande de dérogation configurée pour contrôler le dispositif électrique. Par exemple, le dispositif autonome de gestion est configuré pour détecter des fenêtres ouvertes ou fermées à partir d'un capteur parmi les capteurs environnementaux et arrêter la climatisation tant qu'un nombre prédéterminé de fenêtre est détectée ouvert et en ce que la dérogation peut forcer la climatisation même si le nombre de fenêtre détectée ouverte est supérieur au nombre prédéterminé.
- Le boitier du dispositif autonome de gestion d'un espace comprend des moyens de fixation adaptés pour être fixés à une paroi de l'espace par exemple un plafond, les moyens de fixation permettant au boitier d'être encastré ou en saillie par rapport à la paroi, ou encore en suspension ou positionné sur un chemin de câble.
- L'interface réseau est une interface Ethernet, LPWAN ou KNX.
- Le processeur du dispositif autonome est configuré pour contrôler un dispositif électrique parmi les dispositifs électriques lumineux, des prises commandées, de ventilation, de climatisation, de verrouillage de serrure de porte ou de volet, de fermeture d'une porte ou de volet, de vidéoprojection.
- La pluralité de capteurs environnementaux comprend au moins deux capteurs parmi les capteurs de température, de qualité de l'air, de pression, de luminosité, d'humidité et de son.
- Le capteur d'occupation est un imageur. Par exemple l'imageur est une caméra thermique. Selon un exemple, le dispositif est programmé pour distinguer des déplacements de valeur de température comprise dans une plage de température humaine entre une valeur prédéfinie de température minimum et une valeur prédéfinie de température maximum, par exemple entre 36° et 40°, dans une zone et des apparitions de valeur de température comprise dans la plage de température humaine. En effet, l'humain apparaitra dans la zone alors que l'écran, la tour d'ordinateur, le radiateur qui peut avoir une température dans la plage de température humaine peut apparaitre ou disparaitre de cette plage sans sortir de la zone. En outre, par exemple le dispositif peut produire une carte de température de la zone ayant une valeur prédéfinie de température qui peut être apprise automatiquement par le dispositif par le biais du processeur par exemple grâce à un réseau de neurones ou à un algorithme d'apprentissage automatique. Cette carte de température permet de distinguer plus rapidement par exemple un écran, un radiateur, une tour d'ordinateur par rapport à un humain mobile.
- Le dispositif autonome de gestion d'un espace comprend en outre une antenne pour communiquer avec d'autres dispositifs domotiques, par exemple d'autres capteurs environnementaux par exemple sans fil et/ou d'autres dispositifs électriques comprenant une antenne pour être commander en communiquant selon un protocole domotique sans fil.

L'invention concerne aussi un système comprenant le dispositif autonome décrit précédemment avec ou sans les différentes caractéristiques listées précédemment, et au moins un dispositif électrique contrôlé par le processeur et en ce que le dispositif électrique est au moins un dispositif électrique parmi les dispositifs électriques lumineux, de ventilation, de climatisation, de verrouillage de porte, de vidéoprojection.

L'espace géré par le système peut être un espace parmi un bureau, une salle de réunion, une salle de cotravail, un bloc de sanitaires, une boutique.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique du dispositif autonome de gestion d'un espace selon l'invention.
- La figure 2 montre une représentation schématique du dispositif autonome de gestion d'un espace selon l'invention installé dans l'espace géré.
- La figure 3 montre une représentation schématique du dispositif autonome de gestion d'un espace selon l'invention dans l'espace géré divisé en zones de détection.

### DESCRIPTION DETAILLEE

Les figures sont présentées à titre indicatif et nullement limitatif de l'invention.

Sauf précision contraire, un même élément apparaissant sur des figures différentes présente une référence unique.

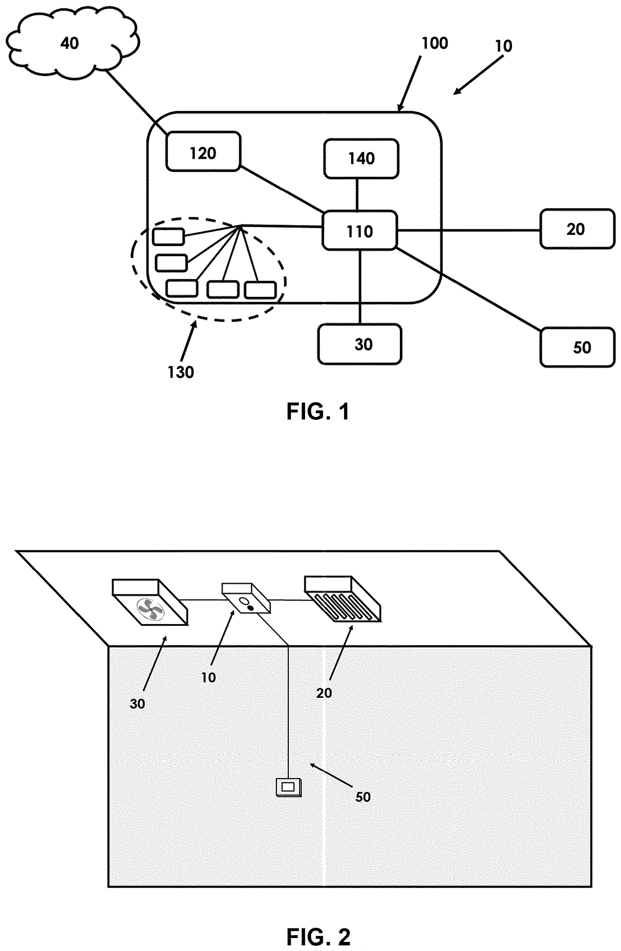

[Fig. 1] La figure 1 montre une représentation schématique du dispositif autonome de gestion d'un espace selon l'invention.

Comme représenté à la Figure 1, le dispositif autonome de gestion d'un espace 10 selon l'invention est relié à un dispositif électrique lumineux 20, à un dispositif électrique d'un dispositif thermique appelé dans la suite dispositif électrique de ventilation et climatisation 30, à une commande de dérogation 50 et à un serveur distant via un réseau de communication 40.

Le dispositif autonome de gestion d'un espace 10 selon l'invention comprend un boitier 100, un processeur 110 logé dans le boitier 100, une interface réseau 120 logé dans le boitier 100, une pluralité de capteurs environnementaux 130 fixés au boitier 100 et un capteur d'occupation 140 fixé au boitier 100.

Le processeur 110 réalise des calculs et traite des données. Lorsque l'on prête une action au processeur 110, c'est en fait une suite de codes instructions en mémoire du dispositif autonome de gestion d'un espace 10 qui est exécutée par le processeur 110. Le dispositif autonome peut comprendre une mémoire additionnelle ou peut utiliser seulement la mémoire du processeur.

Le processeur 110 est relié au dispositif électrique lumineux 20 de manière à pouvoir le contrôler. Par exemple le processeur est relié par un réseau ou électriquement à un dispositif de commande du dispositif électrique lumineux 20. Le dispositif de commande peut être un variateur contrôlant un dispositif électrique (une LED, ou une ampoule) du dispositif électrique lumineux 20.

Le processeur 110 est relié au dispositif électrique de ventilation et climatisation 30 de manière à pouvoir le contrôler. Par exemple le processeur 110 est relié par un réseau ou électriquement à un dispositif de commande du dispositif électrique de ventilation et climatisation 30. Le dispositif de commande peut être un variateur contrôlant un ventilateur pour varier le débit d'air du dispositif électrique de ventilation et climatisation 30 ou un dispositif thermique tel qu'une résistance ou un compresseur-détendeur pour varier l'apport calorifique du dispositif électrique de ventilation et climatisation 30.

Le processeur 110 est relié à la commande de dérogation 50 de manière à pouvoir recevoir une commande de dérogation et la traiter.

Le processeur 110 est relié à l'interface réseau 120 de manière à pouvoir envoyer des données à travers le réseau 40. Le processeur 110 est en outre relié à la pluralité de capteurs environnementaux 130 de manière à pouvoir recevoir des données de la pluralité de capteurs environnementaux 130. Le processeur 110 est aussi relié au capteur d'occupation 140 de manière à pouvoir recevoir des données du capteur d'occupation 140.

L'interface réseau 120 du dispositif autonome de gestion d'un espace 10 est configurée pour envoyer et recevoir des messages selon un protocole à travers un réseau auquel elle est connectée. Le protocole utilisé par l'interface réseau 120 peut être par exemple Ethernet, Bluetooth^{®}, Wifi^{®}, LoRa^{®} ou tout autre protocole réseau. L'interface réseau 120 permet de réaliser la connexion entre le dispositif 10 et le réseau 40, et plus particulièrement entre le processeur 110 et le réseau 40. Le réseau 40 peut être par exemple le réseau Internet, et comprendre au moins un serveur (non représenté à la Figure 1). L'interface réseau 120 envoie des messages à au moins un serveur du réseau 40 et reçoit des messages d'au moins un serveur du réseau 40. L'interface réseau 120 du dispositif autonome de gestion d'un espace 10 permet avantageusement de rendre accessible des mesures réalisées par au moins un capteur de la pluralité de capteurs environnementaux 130, des mesures de l'état du ou des dispositifs électriques pilotés, et des résultats de calculs réalisés par le processeur 110, par exemple le taux d'occupation d'un espace, sur un serveur. Ainsi, un utilisateur souhaitant, à l'aide d'un équipement utilisateur, réserver l'espace géré par le dispositif autonome de gestion d'un espace 10, peut avoir connaissance d'informations sur cet espace, par exemple mesurées par les capteurs environnementaux 130 et/ou calculés par le processeur 110. Cela permet à l'utilisateur de choisir de réserver un espace plutôt qu'un autre, en ayant accès à des informations en temps réel grâce au dispositif autonome de gestion d'un espace 10 et notamment à l'interface réseau 120 qui envoie ces informations à un serveur du réseau 40.

La pluralité de capteurs environnementaux 130 est reliée au processeur 110, de manière à pouvoir envoyer au processeur 110 des données mesurées par la pluralité de capteurs environnementaux 130. Chaque capteur environnemental de la pluralité de capteurs environnementaux 130 permet de mesurer au moins une grandeur physique relative à l'état de l'espace géré par le dispositif autonome de gestion d'un espace 10. On entend par « grandeur physique relative à l'état de l'espace » une grandeur physique permettant de représenter un état de l'espace géré, par exemple la température, la pression, la luminosité, le niveau sonore, ou encore la qualité de l'air de l'espace géré.

Ainsi, la pluralité de capteurs environnementaux 130 peut comprendre un capteur de température, permettant de mesurer la température d'un espace, en degrés Celsius (« °C »), en degrés Fahrenheit (« °F ») ou en degrés Kelvin (« °K »). Ce capteur de température peut être un thermomètre ou une caméra thermique. La pluralité de capteurs environnementaux 130 peut comprendre en outre un capteur de pression, permettant de mesurer la pression atmosphérique d'un espace, par exemple en Pascals (« Pa »). La pluralité de capteurs environnementaux 130 peut comprendre en outre un capteur de luminosité aussi appelé luxmètre, permettant de mesurer la luminosité d'un espace, par exemple en lux. La pluralité de capteurs environnementaux 130 peut comprendre en outre un capteur d'humidité, aussi appelé hygromètre, permettant de mesurer l'humidité relative d'un espace, exprimée par exemple en pourcentage résultant du rapport de la pression partielle de la vapeur d'eau contenue dans l'air sur la pression de vapeur saturante à la même température. La pluralité de capteurs environnementaux 130 peut comprendre en outre un capteur de son aussi appelé microphone, permettant de mesurer le niveau sonore d'un espace, par exemple en Décibels audibles (« dBa »). La pluralité de capteurs environnementaux 130 peut comprendre en outre un capteur de qualité de l'air, permettant de mesurer la qualité de l'air d'un espace, par exemple en mesurant les composés organiques volatiles totaux (« tVOC » selon la dénomination anglo-saxonne « total Volatil Organic Components ») en milligrammes par mètres cubes (« mg/m³ ») en partie par million (« ppm »), et/ou en partie par milliard (« ppb ») et/ou par exemple en mesurant la présence de dioxyde de carbone (« CO2 ») de l'espace en parties par million (« ppm »).

Le capteur d'occupation 140 est relié au processeur 110, de manière à pouvoir envoyer au processeur 110 des données mesurées par le capteur d'occupation 140. Le capteur d'occupation permet au processeur 110 de mesurer l'occupation de l'espace géré, c'est-à-dire le nombre de personnes dans l'espace géré. Il permet aussi au processeur 110 de définir au moins une zone de détection dans l'espace géré. Le capteur d'occupation 140 prend une mesure de l'espace géré, par exemple une image dans le cas où le capteur d'occupation 140 est une caméra, et l'envoie au processeur 110. Le capteur d'occupation 140 peut comprendre un processeur. Le capteur d'occupation 140 peut être un imageur, c'est-à-dire tout type de capteur permettant de capturer des images tel qu'une caméra, par exemple un capteur CMOS, un bolomètre, un capteur pyroélectrique ou tout autre type de capteur permettant au processeur 110 de calculer un taux d'occupation et de définir des zones de détection dans l'espace géré. Ainsi, le capteur d'occupation 140 prend une ou plusieurs images de l'espace géré, il l'envoie au processeur 110, par exemple périodiquement, puis le processeur 110 calcule le taux d'occupation de l'espace géré en réalisant un traitement de l'image, par exemple grâce à un réseau de neurones entraîné pour détecter des personnes dans une image, le réseau de neurones étant enregistré en mémoire du dispositif autonome de gestion d'un espace 10. Ce calcul du taux d'occupation peut être périodique, par exemple toutes les minutes. Le dispositif autonome de gestion d'un espace 10 est autonome car il comprend le processeur 110 capable de définir des zones de détection dans l'espace géré et de calculer un taux d'occupation pour chaque zone de détection en se basant sur les mesures du capteur d'occupation 140. Ainsi, lorsque le capteur d'occupation 140 est un imageur, par exemple une caméra, un avantage du caractère autonome du dispositif autonome de gestion d'un espace 10 est que les données captées par le capteur d'occupation 140, c'est-à-dire les images ou trames vidéo, ne circulent pas sur un réseau. Il est donc plus difficile d'intercepter ces données et donc de surveiller, visualiser les images, puisqu'elles sont traitées en local dans le dispositif autonome de gestion d'un espace 10 que dans le cas où les images sont transmises sur le réseau. De plus, le capteur d'occupation 140 peut ne pas être accessible par l'interface réseau 120, par exemple lorsque, comme représenté à la Figure 1, le processeur 110 réalise l'interface entre le capteur d'occupation 140 et l'interface réseau 120. Cela rend très difficile pour quelqu'un de malintentionné de prendre le contrôle ou d'accéder au capteur d'occupation 140. Le dispositif autonome de gestion d'un espace 10 peut comprendre une pluralité de capteurs d'occupation 140 de type différent et/ou de même type avec par exemple des résolutions différentes, afin d'avoir une meilleure granularité de détection des personnes et de permettre un traitement plus simple par le processeur 110. Dans un mode de réalisation alternatif, le processeur 110 peut comprendre deux processeurs, un premier processeur étant dédié au calcul de taux d'occupation, et un second processeur gérant le pilotage des dispositifs électriques et l'envoi de messages sur le réseau.

Le dispositif autonome de gestion d'un espace 10 est relié à une pluralité de dispositifs électriques. Ces dispositifs électriques peuvent être par exemple des dispositifs électriques lumineux tels que des luminaires, des dispositifs de ventilation tels que des ventilateurs, des dispositifs électriques de climatisation, tels que des climatiseurs ou des chauffages, des dispositifs électriques de verrouillage de porte ou de volet tels que des serrures électriques, des dispositifs électriques de vidéo projection tels que des vidéoprojecteurs ou des écrans, ou tout autre dispositif électrique. Ces dispositifs électriques sont pilotés par le processeur 110, qui leur envoie des commandes soit en suivant un protocole commun, par exemple le protocole KNX ou tout autre protocole de communication permettant de commander des dispositifs électriques indifféremment du type de dispositif électrique, soit en suivant un protocole particulier pour chaque type de dispositif électrique, par exemple en utilisant le protocole DALI pour les luminaires, le protocole BACnet pour la ventilation/climatisation, etc.

A la Figure 1, et de manière non limitative, le dispositif autonome de gestion d'un espace 10 est relié à un dispositif électrique lumineux 20 et à un dispositif électrique de ventilation et climatisation 30. Plus précisément, le processeur 110 du dispositif autonome de gestion d'un espace 10 est relié à un dispositif électrique lumineux 20 et à un dispositif électrique de ventilation et climatisation 30. Cela permet au processeur 110 de piloter le dispositif électrique lumineux 20 et le dispositif électrique de ventilation et climatisation 30. Selon un autre exemple, le dispositif autonome de gestion comprend une connectique pour y insérer un dispositif électrique lumineux, par exemple une ampoule ou une LED.

Pour piloter le dispositif électrique lumineux 20, le processeur 110 peut communiquer sur un bus DALI avec le dispositif électrique lumineux 20 pour commander son extinction, son allumage, l'augmentation de sa luminosité ou la baisse de sa luminosité. De manière alternative, le processeur 110 peut contrôler le dispositif électrique lumineux 20 en utilisant le protocole KNX, ou tout autre protocole permettant de contrôler un dispositif électrique lumineux 20 dans un réseau électrique. Alternativement encore, le processeur 110 peut piloter le dispositif électrique lumineux 20 par l'intermédiaire d'un relais.

Pour piloter le dispositif électrique de ventilation et climatisation 30, le processeur 110 peut utiliser le protocole KNX, BACnet, M-Bus, Modbus ou tout autre protocole permettant de contrôler un dispositif électrique de ventilation et climatisation 30 dans un réseau électrique.

Le dispositif autonome de gestion d'un espace 10 est autonome en outre car il comprend un processeur capable de piloter une pluralité de dispositifs électriques en se basant sur des mesures de capteurs environnementaux 130, sans avoir à faire réaliser le traitement des données par un serveur distant.

Le processeur 110 du dispositif autonome de gestion d'un espace 10 est configuré pour piloter les dispositifs électriques auxquels il est relié, par exemple en utilisant une pluralité d'algorithmes de décision en mémoire du dispositif autonome de gestion d'un espace 10.

Ainsi, pour piloter un dispositif électrique lumineux 20 tel qu'un luminaire, le processeur 110 du dispositif autonome de gestion d'un espace 10 est configuré pour allumer ou augmenter la luminosité du dispositif électrique lumineux 20 lorsqu'une occupation est détectée à partir du taux d'occupation calculé par le processeur 110 en se basant sur les mesures du capteur d'occupation 140 et qu'un capteur environnemental de la pluralité de capteurs environnementaux 130 mesure une luminosité inférieure à une valeur de luminosité prédéfinie de manière à maintenir une luminosité prédéfinie. Par exemple, cette valeur de luminosité prédéfinie peut être à 500 lux pour une expérience visuelle optimale dans le cas de la gestion d'un bureau ou d'un open-space, à 750 lux pour peindre des véhicules dans le cas de la gestion d'un centre de réparation de véhicules, ou encore à 1000 lux pour du contrôle qualité dans le cas de la gestion d'une usine. En outre, le processeur 110 du dispositif autonome de gestion d'un espace 10 est configuré pour éteindre ou baisser la luminosité du dispositif électrique lumineux 20 lorsqu'aucune occupation n'est détectée ou qu'un capteur environnemental de la pluralité de capteurs environnementaux 130 mesure une luminosité supérieure à la valeur prédéfinie de manière à maintenir la luminosité prédéfinie. Le dispositif autonome de gestion d'un espace 10 peut prévoir plusieurs modes de fonctionnement, par exemple un mode « travail » dans lequel la valeur prédéfinie de luminosité est classique, par exemple à 500 lux pour une salle de réunion, et par exemple un mode « projection », dans lequel la valeur prédéfinie est bien plus basse, par exemple 100 lux, voire une valeur nécessitant que le dispositif électrique lumineux 20 soit éteint. Dans d'autres cas d'applications tels que dans une cuisine partagée par exemple, il peut aussi être nécessaire d'avoir plusieurs modes de fonctionnement : un mode « préparation et cuisson » où la valeur prédéfinie de luminosité est par exemple de 300 lux, et un mode « finitions » où la valeur prédéfinie de luminosité est par exemple de 500 lux pour la finition, le glaçage et la décoration.

Pour piloter un dispositif électrique de ventilation tel qu'un ventilateur, le processeur 110 du dispositif autonome de gestion d'un espace 10 est configuré pour allumer ou augmenter la puissance du dispositif de ventilation lorsqu'une occupation est détectée à partir du taux d'occupation calculé par le processeur 110 en se basant sur les mesures du capteur d'occupation 140 et qu'un capteur environnemental de la pluralité de capteurs environnementaux 130 mesure une qualité de l'air inférieure à une qualité de l'air prédéfinie de manière à maintenir une qualité de l'air prédéfinie. En effet, en comparant une mesure de qualité de l'air à une valeur prédéfinie, il est possible de suivre les évolutions de la qualité de l'air et de l'adapter en renouvelant l'air lorsque cela est nécessaire, c'est-à-dire lorsque la qualité de l'air n'est pas jugée suffisamment proche de la qualité de l'air prédéfinie. En outre, le processeur 110 du dispositif autonome de gestion d'un espace 10 est configuré pour éteindre ou baisser la puissance du dispositif de ventilation 30 lorsqu'aucune occupation n'est détectée ou qu'un capteur environnemental de la pluralité de capteurs environnementaux 130 mesure une qualité de l'air supérieure à une valeur prédéfinie de qualité de l'air de manière à maintenir la qualité de l'air prédéfinie.

Ainsi, le dispositif autonome de gestion d'un espace 10 permet de renouveler l'air d'une pièce lorsque la qualité de l'air n'est pas suffisamment proche de la qualité de l'air prédéfinie. Par exemple, lorsque l'espace géré est une salle de réunion, il est important de renouveler l'air lorsque la réunion dure plusieurs heures et implique de nombreuses personnes, notamment concernant la saturation en dioxyde de carbone (CO2) de l'air et l'odeur. Ainsi, les utilisateurs ayant réservé la salle par la suite pourront utiliser une salle avec une qualité d'air acceptable et une odeur supportable. Lorsque l'espace géré est une salle de laboratoire comprenant des paillasses, il est important de renouveler l'air, surtout lorsque les utilisateurs suivants vont réaliser des expériences sensibles à la qualité de l'air. En outre, le dispositif autonome peut être configuré pour répondre à une requête d'un utilisateur par le biais de l'interface réseau, sur la qualité de l'air. L'utilisateur peut ainsi interroger plusieurs dispositifs autonomes, situés dans différents espaces, pour permettre de choisir la salle de réunion ou un bureau le plus agréable possible.

Pour piloter un dispositif électrique de climatisation tel qu'un climatiseur et/ou un chauffage, le processeur 110 du dispositif autonome de gestion d'un espace 10 est configuré pour baisser la température du dispositif de climatisation lorsqu'une occupation est détectée à partir du taux d'occupation calculé par le processeur 110 en se basant sur les mesures du capteur d'occupation 140 et qu'un capteur environnemental de la pluralité de capteurs environnementaux 130 mesure une température supérieure à une valeur prédéfinie de température de manière à maintenir une température prédéfinie. Par exemple, lorsque l'espace géré est un poste de travail d'une personne dont le travail est sédentaire, tel qu'un bureau, une salle de réunion, une température définie comme étant optimale peut être de 23 degrés Celsius. Lorsque l'espace géré est le poste de travail d'une personne dont le travail l'amène à réaliser une activité physique, la température optimale peut être de 19 degrés Celsius. En outre, le processeur 110 du dispositif autonome de gestion d'un espace 10 est configuré pour augmenter la température du dispositif de climatisation lorsqu'une occupation est détectée et qu'un capteur environnemental de la pluralité de capteurs environnementaux 130 mesure une température inférieure à une valeur prédéfinie de température de manière à maintenir une température prédéfinie. Le dispositif autonome de gestion d'un espace 10 peut être configuré pour éteindre le dispositif électrique de climatisation lorsqu'aucune occupation n'est détectée. Ainsi, une température optimale peut être maintenue dans un espace géré par le dispositif autonome de gestion d'un espace 10 selon l'invention. Un utilisateur souhaitant utiliser un espace pourra aussi comparer la température de plusieurs espaces gérés par plusieurs dispositifs autonomes de gestion d'un espace 10 selon l'invention pour réserver celui avec une température lui convenant le mieux. En outre, l'utilisateur peut envoyer une requête à travers le réseau 40 au dispositif autonome de gestion d'un espace 10 pour modifier la température prédéfinie d'un espace réservé durant son créneau temporel de réservation de l'espace géré.

Le dispositif autonome de gestion d'un espace 10 peut être programmé pour détecter des anomalies de température dans des zones données et émettre une donnée d'information sur un serveur.

Par exemple, le dispositif autonome de gestion d'un espace 10 peut être programmé pour détecter un changement de température au-delà d'une valeur prédéfinie et émettre une donnée d'information de risque d'incendie. Par exemple sur un bureau, lorsqu'un capteur environnemental de la pluralité de capteurs environnementaux 130 mesure une température supérieure à la valeur prédéfinie de température dans cette zone donnée, par exemple lorsque le capteur environnemental est une caméra thermique. La valeur prédéfinie de température peut être apprise automatiquement par le dispositif par le biais du processeur 110, par exemple grâce à un réseau de neurones ou à un algorithme d'apprentissage automatique. Le dispositif autonome de gestion d'un espace 10 est alors capable de connaître un état de température normale de la pièce qu'il surveille, et donc de fixer dans une zone donnée, la valeur prédéfinie de température à la température moyenne mesurée dans cette zone. Une zone donnée peut être de grande taille, par exemple en comprenant plusieurs bureaux, ou localisée, par exemple en comprenant un seul dispositif électronique tel qu'un ordinateur ou un écran.

Cela permet de détecter un départ d'incendie, le foyer de chaleur étant localisé dans une zone qui en temps normal a une température moyenne inférieure à la valeur de température détectée, aucun mouvement n'ayant été détecté dans cette zone donnée par le capteur d'occupation 140.

Selon un exemple le dispositif autonome de gestion d'un espace 10 peut en outre être programmé pour détecter un changement de température au-delà d'une valeur prédéfinie à des horaires définies ou lorsque le capteur d'occupation détecte aucune personne et émettre une donnée d'information de charge restée allumée. Cela peut aussi permettre de détecter qu'un dispositif électronique ou électrique tel qu'un écran, un ordinateur ou un radiateur est resté allumé, par exemple la nuit, et d'en informer un utilisateur ou de le piloter à l'état éteint. Cela permet notamment de réaliser la gestion de la consommation d'énergie de la zone donnée.

Ainsi, le dispositif autonome de gestion d'un espace 10 est autonome en ce qu'il peut piloter des dispositifs électriques en se basant sur des mesures réalisées par des capteurs environnementaux 130 qu'il comprend, n'utilisant pas ou peu de bande passante en prenant ces décisions localement. Avantageusement, dans le cas où le réseau 40 deviendrait inaccessible, il est toujours possible pour le dispositif autonome de gestion d'un espace 10 de piloter les dispositifs électriques auquel il est relié de manière autonome.

[Fig. 2] La figure 2 montre une représentation schématique du dispositif autonome de gestion d'un espace selon l'invention installé dans l'espace géré.

Comme représenté à la Figure 2, le dispositif autonome de gestion d'un espace 10 est installé préférentiellement au plafond, notamment pour que le capteur d'occupation 140 ait une vue de dessus de l'espace géré. Le dispositif autonome de gestion d'un espace 10 peut avoir son boitier 100 installé en saillie, être encastré, en suspension ou positionné sur un chemin de câble. A la figure 2, et de manière non limitative, le dispositif autonome de gestion d'un espace 10 est relié à un luminaire 20 et à un climatiseur/ventilateur 30. Comme présenté précédemment, le dispositif autonome de gestion d'un espace 10 est configuré pour piloter les dispositifs électriques 20 et 30 en fonction de mesures réalisées par la pluralité de capteurs environnementaux 130 et du taux d'occupation calculé par le processeur 110 à partir des données du capteur d'occupation 140.

En outre, le dispositif autonome de gestion d'un espace 10 est relié à une commande de dérogation 50, par exemple un bouton poussoir comme représenté à la Figure 2. Ainsi, lorsque le dispositif autonome de gestion d'un espace 10 pilote le luminaire 20, et que l'utilisateur ne souhaite pas que ce pilotage soit automatique, ou souhaite éteindre le luminaire pour par exemple projeter une vidéo ou un diaporama, il peut utiliser la commande de dérogation 50, qui enverra une requête d'extinction ou d'allumage du luminaire 20 au processeur 110, le processeur 110 envoyant alors au luminaire 20 une commande d'extinction ou d'allumage. De la même façon si un utilisateur ne souhaite pas de ventilation et que le dispositif autonome de gestion d'un espace 10 pilote a ventilation 30, il peut l'éteindre en utilisant une autre commande de dérogation 50 (non représentée). La commande de dérogation peut comprendre un sélectionneur ou plusieurs boutons pour commander soit la lumière soit la ventilation 30.

En outre, la commande de dérogation peut être un écran tactile par exemple, permettant de contrôler les paramètres de fonctionnement du dispositif autonome tels que la luminosité prédéfinie, la température prédéfinie, la qualité de l'air prédéfinie, le mode de fonctionnement comme présenté auparavant, ou tout autre paramètre de fonctionnement du dispositif autonome de gestion d'un espace 10.

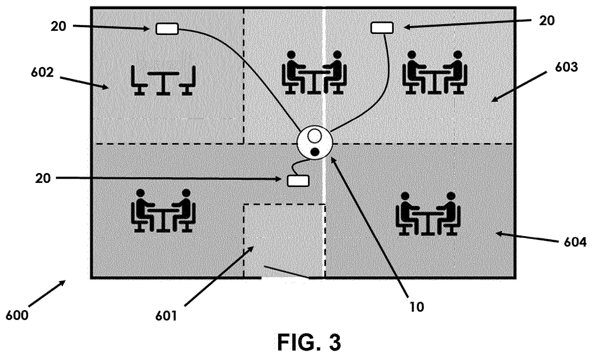

[Fig. 3] La figure 3 montre une représentation schématique du dispositif autonome de gestion d'un espace selon l'invention dans l'espace géré divisé en zones de détection.

A la Figure 3, l'espace 600 géré par le dispositif autonome de gestion d'un espace 10 comprend 4 zones de détection 601, 602, 603 et 604. Le dispositif autonome de gestion d'un espace 10 peut ne définir qu'une zone de détection regroupant l'ensemble de l'espace géré 600. L'espace 600 représenté à la Figure 3 est un open-space ou un espace de cotravail et comprend plusieurs postes de travail, par exemple des bureaux. Un avantage du dispositif autonome de gestion d'un espace 10 est qu'il peut définir des zones de détection dans l'espace géré 600, par exemple 4 zones de détection sont définies à la Figure 3. Ainsi, le dispositif autonome de gestion d'un espace 10 peut piloter les dispositifs électriques par zone de détection.

La définition de zones de détection 601, 602, 603 et 604 dans l'espace 600 est réalisée par le processeur 110 en se basant sur les mesures réalisées par le capteur d'occupation 140, par exemple sur des images lorsque le capteur d'occupation 140 est une caméra qui peut être mobile ou qui peut être plusieurs caméras. Le processeur 110 traite alors les images provenant du capteur d'occupation 140 pour définir des zones de détection dans l'espace 600, par exemple 4 zones de détection. Une fois les zones de détection définies, pour chaque zone de détection, le processeur calcule le taux d'occupation de la zone de détection.

A la figure 3 sont représentés plusieurs dispositifs électriques lumineux 20, un par zone de détection dans les zones de détection 602, 603 et 604. Le dispositif électrique lumineux 20 de la zone 604 peut être utilisé pour augmenter la luminosité de la zone de détection 601. Ainsi, pour chaque zone de détection, le dispositif autonome de gestion d'un espace 10 pilote le dispositif électrique lumineux 20 lorsque le taux d'occupation de la zone de détection est supérieur à un seuil de taux d'occupation de la zone de détection. Par exemple, ce seuil de taux de détection peut avoir une valeur de 1, indiquant que dès qu'une personne est détectée dans une zone de détection, le dispositif autonome de gestion d'un espace 10 pilote le dispositif électrique lumineux 10 de la zone de détection. Par exemple, dans la zone 602 à la figure 3, aucune occupation n'est détectée. Le dispositif autonome de gestion d'un espace 10 pilote le dispositif électrique lumineux 20 à l'état éteint. Dans la zone 603, une occupation est détectée. Si un capteur environnemental de la pluralité de capteurs environnementaux 130 détecte que la luminosité est trop faible, par exemple si le soleil se couche ou si un volet roulant a été fermé, le dispositif autonome de gestion d'un espace 10 pilote alors le dispositif électrique lumineux 20 de la zone de détection 603 à l'état allumé ou augmente la luminosité du dispositif électrique lumineux 20 lorsque cela est possible.

Avantageusement dans l'espace 600, le dispositif autonome de gestion d'un espace 10 surveille une zone de détection 601 autour d'une porte d'entrée à l'espace 600. Il est ainsi possible pour le dispositif autonome de gestion d'un espace 10 de connaître en temps réel les entrées et sorties de personnes de l'espace 600.

Les zones de détection permettent une granularité plus fine dans la réservation. En effet, le dispositif autonome de gestion d'un espace 10 envoie à travers le réseau 40 de la figure 1 le taux d'occupation calculé pour chaque zone de détection ainsi que les mesures réalisées par la pluralité de capteurs environnementaux 130, certaines de ces mesures pouvant être par zone, par exemple avec une caméra thermique pour la température, ou pouvant être pour tout l'espace 600. La caméra thermique pouvant réalisée la fonction du capteur d'occupation. Ces informations sont envoyées à un serveur connecté au réseau de communication 40. Ce serveur permet de rendre accessible à un utilisateur les données du dispositif autonome de gestion d'un espace 10 pour faciliter son choix de réservation. Ainsi, dans un espace de cotravail ou dans un open-space, un utilisateur pourra réserver un bureau en temps réel car le dispositif autonome de gestion d'un espace 10 aura détecté qu'une zone de détection, par exemple la zone de détection 602, est inoccupée. L'utilisateur a aussi accès aux mesures de la pluralité de capteurs environnementaux 130, lui permettant de choisir un espace plutôt qu'un autre, dans le cas où un bâtiment comprend par exemple plusieurs espaces 600 et donc plusieurs dispositifs autonomes de gestion d'un espace 10. Ainsi, la réservation d'un espace est plus simple pour un utilisateur et plus fiable : si la zone de détection est réservée mais qu'elle est inoccupée, l'utilisateur le saura et pourra la réserver à son tour sur ce même créneau. En outre, il est possible par exemple pour le serveur accessible via le réseau de communication 40 de comparer le taux d'occupation actuel au taux d'occupation prévu lors de la réservation, grâce aux calculs de taux d'occupation réalisés par le dispositif autonome de gestion d'un espace 10, et de demander à l'utilisateur ayant réservé le créneau temporel actuel et ne se trouvant pas dans la zone de détection réservée s'il souhaite conserver sa réservation.

Dans le cas où le capteur d'occupation 140 est une caméra thermique, le dispositif autonome de gestion d'un espace 10 est programmé pour calculer le taux d'occupation en distinguer des déplacements de valeur de température mesurée par la caméra thermique comprise dans une plage de température humaine entre une valeur prédéfinie de température minimum et une valeur prédéfinie de température maximum, par exemple entre 36° et 40°, dans une zone et des apparitions de mesure de valeur de température comprise dans la plage de température humaine. En effet, l'humain apparaitra dans la zone alors que l'écran, la tour d'ordinateur, le radiateur qui peut avoir une température dans la plage de température humaine peut apparaitre ou disparaitre de cette plage sans sortir de la zone. En outre, par exemple le dispositif peut produire une carte de température de la zone ayant une valeur prédéfinie de température qui peut être apprise automatiquement par le dispositif par le biais du processeur par exemple grâce à un réseau de neurones ou à un algorithme d'apprentissage automatique. Cette carte de température permet de distinguer plus rapidement par exemple un écran, un radiateur, une tour d'ordinateur par rapport à un humain mobile.

Grâce à la détection en temps réel du dispositif autonome de gestion d'un espace 10, la réservation d'une partie d'un espace ou d'un espace est améliorée, en étant plus fiable, plus précise et en donnant plus d'informations à un utilisateur pour faire son choix. En outre, le dispositif autonome de gestion d'un espace 10 permet une meilleure gestion des dispositifs électriques qu'il pilote, en pilotant chaque dispositif électrique en fonction de la zone dans laquelle il se trouve. Enfin, le dispositif autonome de gestion d'un espace 10 permet une utilisation moindre de la bande passante du ou des réseaux de communication auxquels il est connecté en réalisant tous les traitements en local, par son processeur. Cela permet aussi de se prémunir des problèmes liés au réseau et au serveur en réunissant toute l'intelligence dans un même dispositif.

## Revendications

1. Dispositif autonome (10) de gestion d'un espace (600), comprenant :
- un unique boitier (100), au moins un processeur (110) et au moins une interface réseau (120) logé dans l'unique boitier (100), **caractérisé en ce que** le dispositif autonome (10) comprend :
- une pluralité de capteurs environnementaux (130) fixés à l'unique boitier (100),
- au moins un capteur d'occupation (140) fixé à l'unique boitier (100),
et **en ce que** :
- le processeur (110) est configuré pour :
∘ définir au moins une zone de détection (601,602,603,604) dans l'espace (600),
∘ calculer un taux d'occupation de chaque zone de détection (601,602,603,604) en fonction de données issues du au moins un capteur d'occupation (140),
∘ contrôler une pluralité de types de dispositifs électriques (20,30) de l'espace (600) reliés au dispositif autonome (10), par envoi de commandes soit en suivant un protocole commun permettant de commander des dispositifs électriques indifféremment du type de dispositif électrique soit en suivant un protocole particulier pour chaque type de dispositif électrique, en fonction de données issues de la pluralité de capteurs environnementaux (130) et du taux d'occupation de chaque zone de détection (601,602,603,604), dans lequel la pluralité de types de dispositifs électriques (20, 30) est parmi les dispositifs électriques lumineux, de ventilation, de climatisation, de verrouillage de porte, de vidéoprojection,
- l'interface réseau (120) est configurée pour envoyer à travers un réseau (40) les données issues de la pluralité de capteurs environnementaux (130), l'état d'au moins un des dispositifs électriques (20,30) de l'espace (600) et le taux d'occupation de chaque zone de détection (601,602,603,604) calculé par le processeur (110).

2. Dispositif autonome (10) de gestion d'un espace (600) selon la revendication précédente **caractérisé en ce que** le taux d'occupation pour chaque zone de présence (601,602,603,604) est calculé par le processeur (110) par traitement d'images issues du capteur d'occupation (140).

3. Dispositif autonome (10) de gestion d'un espace (600) selon l'une quelconque des revendications précédentes **caractérisé en ce qu'**il est configuré pour piloter un dispositif électrique (20,30) d'une zone de détection (600) lorsque le taux d'occupation de la zone de détection (600) calculé par le processeur (110) est supérieur à un taux d'occupation de la zone de détection (600) prédéfini.

4. Dispositif autonome (10) de gestion d'un espace (600) selon l'une quelconque des revendications précédentes **caractérisé en ce qu'**il est configuré pour envoyer, via l'interface réseau (120), les données issues des capteurs environnementaux (130), l'état d'au moins un des dispositifs électriques (20,30) de l'espace (600) et le taux d'occupation périodiquement.

5. Dispositif autonome (10) de gestion d'un espace (600) selon l'une quelconque des revendications précédentes **caractérisé en ce que** le processeur (110) est configuré pour calculer le taux d'occupation de chaque zone de détection (601,602,603,604) et pour mesurer l'état d'au moins un des dispositifs électriques (20,30) de l'espace (600) périodiquement.

6. Dispositif autonome (10) de gestion d'un espace (600) selon l'une quelconque des revendications précédentes **caractérisé en ce qu'**il comprend en outre une commande de dérogation (50) configurée pour contrôler au moins un dispositif électrique (20,30) parmi les dispositifs électriques.

7. Dispositif autonome (10) de gestion d'un espace (600) selon l'une quelconque des revendications précédentes **caractérisé en ce qu'**il comprend un unique boitier (100) dans lequel est situé le processeur (110), l'interface réseau (120) et sur lequel est monté la pluralité de capteur environnementaux (130) et l'au moins un capteur d'occupation (140), l'unique boitier (100) étant adapté à être installé au plafond de l'espace, encastré, en saillie, en suspension ou positionné sur un chemin de câble.

8. Dispositif autonome (10) de gestion d'un espace (600) selon l'une quelconque des revendications précédentes **caractérisé en ce que** l'interface réseau (120) est une interface Ethernet, une interface KNX ou LPWAN.

9. Dispositif autonome (10) de gestion d'un espace (600) selon l'une quelconque des revendications précédentes **caractérisé en ce que** la pluralité de capteurs environnementaux (130) comprend au moins deux capteurs parmi les capteurs de température, de qualité de l'air, de pression, de luminosité, d'humidité et de son.

10. Dispositif autonome (10) de gestion d'un espace (600) selon l'une quelconque des revendications précédentes **caractérisé en ce que** le capteur d'occupation (140) est un imageur.

11. Système comprenant un dispositif autonome (10) de gestion d'un espace (600) selon l'une quelconque des revendications précédentes et au moins un dispositif électrique (20,30) contrôlé par le processeur (110) et en ce que le dispositif électrique (20,30) est au moins un dispositif électrique parmi les dispositifs électriques lumineux (20), de ventilation (30), de climatisation, de verrouillage de porte, de vidéoprojection, prise ou volet.

12. Système selon la revendication précédente **caractérisé en ce que** l'espace (600) géré est un espace parmi un bureau, une salle de réunion, une salle de cotravail, un bloc de sanitaires, une boutique.

## Patentansprüche

1. Autonome Vorrichtung (10) zur Verwaltung eines Raums (600), umfassend:
- ein einziges Gehäuse (100), mindestens einen Prozessor (110) und mindestens eine Netzwerkschnittstelle (120), die in dem einzigen Gehäuse (100) untergebracht ist, **dadurch gekennzeichnet, dass** die autonome Vorrichtung (10) umfasst:
- eine Vielzahl von Umgebungssensoren (130), die an dem einzigen Gehäuse (100) befestigt sind,
- mindestens einen Belegungssensor (140), der an dem einzigen Gehäuse (100) angebracht ist, und **dadurch gekennzeichnet, dass**:
- der Prozessor (110) konfiguriert ist, um:
o mindestens einen Erfassungsbereich (601, 602, 603, 604) im Raum (600) zu definieren,
o eine Belegungsrate jedes Erfassungsbereichs (601, 602, 603, 604) auf der Grundlage von Daten aus dem mindestens einen Belegungssensor (140) zu berechnen,
o eine Vielzahl von Arten elektrischer Geräte (20, 30) des Raums (600), die mit der autonomen Vorrichtung (10) verbunden sind, zu steuern, durch Senden von Befehlen entweder gemäß einem gemeinsamen Protokoll, das es ermöglicht, elektrische Geräte unabhängig vom Typ des elektrischen Geräts zu steuern, oder gemäß einem für jeden Typ von elektrischem Gerät spezifischen Protokoll, basierend auf Daten, die von der Vielzahl von Umgebungssensoren (130) stammen, und der Belegungsrate jedes Erfassungsbereichs (601, 602, 603, 604), wobei die Vielzahl von Typen elektrischer Vorrichtungen (20, 30) zu den elektrischen Vorrichtungen für Beleuchtung, Belüftung, Klimatisierung, Türverriegelung und Videoprojektion gehört,
- die Netzwerkschnittstelle (120) so konfiguriert ist, dass sie über ein Netzwerk (40) die Daten aus der Vielzahl von Umgebungssensoren (130), den Status mindestens eines der elektrischen Geräte (20, 30) des Raums (600) und die vom Prozessor (110) berechnete Belegungsrate jedes Erfassungsbereichs (601, 602, 603, 604) sendet.

2. Autonome Vorrichtung (10) zur Verwaltung eines Raums (600) gemäß dem vorstehenden Anspruch, **dadurch gekennzeichnet, dass** die Belegungsrate für jeden Anwesenheitsbereich (601, 602, 603, 604) vom Prozessor (110) durch Verarbeitung von Bildern berechnet wird, die vom Belegungssensor (140) stammen.

3. Autonome Vorrichtung (10) zur Verwaltung eines Raums (600) gemäß einem der vorstehenden Ansprüche, **dadurch gekennzeichnet, dass** sie so konfiguriert ist, dass sie eine elektrische Vorrichtung (20, 30) eines Erfassungsbereichs (600) steuert, wenn die vom Prozessor (110) berechnete Belegungsrate des Erfassungsbereichs (600) über einer vordefinierten Belegungsrate des Erfassungsbereichs (600) liegt.

4. Autonome Vorrichtung (10) zur Verwaltung eines Raums (600) gemäß einem der vorstehenden Ansprüche, **dadurch gekennzeichnet, dass** sie so konfiguriert ist, dass sie über die Netzwerkschnittstelle (120) die von den Umgebungssensoren (130) stammenden Daten, den Status mindestens einer der elektrischen Vorrichtungen (20, 30) des Raums (600) und die Belegungsrate regelmäßig sendet.

5. Autonome Vorrichtung (10) zur Verwaltung eines Raums (600) gemäß einem der vorstehenden Ansprüche, **dadurch gekennzeichnet, dass** der Prozessor (110) so konfiguriert ist, dass er die Belegungsrate jedes Erfassungsbereichs (601, 602, 603, 604) berechnet und den Status mindestens einer der elektrischen Vorrichtungen (20, 30) des Raums (600) regelmäßig misst.

6. Autonome Vorrichtung (10) zur Verwaltung eines Raums (600) gemäß einem der vorstehenden Ansprüche, **dadurch gekennzeichnet, dass** sie außerdem eine Ausnahmesteuerung (50) umfasst, die so konfiguriert ist, dass sie mindestens eine elektrische Vorrichtung (20, 30) unter den elektrischen Vorrichtungen steuert.

7. Autonome Vorrichtung (10) zur Verwaltung eines Raums (600) gemäß einem der vorstehenden Ansprüche, **dadurch gekennzeichnet, dass** sie ein einziges Gehäuse (100) umfasst, in dem der Prozessor (110) und die Netzwerkschnittstelle (120) untergebracht sind und an dem die Vielzahl von Umgebungssensoren (130) und der mindestens eine Belegungssensor (140) angebracht sind, wobei das einzige Gehäuse (100) dafür ausgelegt ist, an der Decke des Raums installiert zu werden, und zwar eingebaut, vorstehend, hängend oder auf einer Kabelbahn positioniert.

8. Autonome Vorrichtung (10) zur Verwaltung eines Raums (600) gemäß einem der vorstehenden Ansprüche, **dadurch gekennzeichnet, dass** die Netzwerkschnittstelle (120) eine Ethernet-Schnittstelle, eine KNX-Schnittstelle oder eine LPWAN-Schnittstelle ist.

9. Autonome Vorrichtung (10) zur Verwaltung eines Raums (600) gemäß einem der vorstehenden Ansprüche, **dadurch gekennzeichnet, dass** die Vielzahl von Umgebungssensoren (130) mindestens zwei Sensoren aus der Gruppe der Temperatur-, Luftqualitäts-, Druck-, Helligkeits-, Feuchtigkeits- und Geräuschsensoren umfasst.

10. Autonome Vorrichtung (10) zur Verwaltung eines Raums (600) gemäß einem der vorstehenden Ansprüche, **dadurch gekennzeichnet, dass** der Belegungssensor (140) ein Bildgeber ist.

11. System mit einer autonomen Vorrichtung (10) zur Verwaltung eines Raums (600) gemäß einem der vorstehenden Ansprüche und mindestens einer vom Prozessor (110) gesteuerten elektrischen Vorrichtung (20, 30), wobei die elektrische Vorrichtung (20, 30) mindestens eine elektrische Vorrichtung aus den elektrischen Vorrichtungen Beleuchtung (20), Lüftungs- (30), Klimatisierungs-, Türverriegelungs-, Videoprojektions-, Steckdosen- oder Rollladenvorrichtungen ist.

12. System gemäß dem vorhergehenden Anspruch, **dadurch gekennzeichnet, dass** der verwaltete Raum (600) ein Raum in einem Büro, einem Besprechungsraum, einem Gemeinschaftsarbeitsraum, einem Sanitärbereich oder einem Laden ist.

## Claims

1. An autonomous device (10) for managing a space (600), comprising:
- a single housing (100), at least one processor (110) and at least one network interface (120) housed in the single housing (100), **characterised in that** the autonomous device (10) comprises:
- a plurality of environmental sensors (130) attached to the single housing (100),
- at least one occupancy sensor (140) attached to the single housing (100), and **in that**:
- the processor (110) is configured to:
o define at least one detection zone (601, 602, 603, 604) in the space (600),
o calculate an occupancy rate for each detection zone (601, 602, 603, 604) as a function of data derived from the at least one occupancy sensor (140),
o control a plurality of types of electrical devices (20, 30) in the space (600) connected to the autonomous device (10), by sending commands either by following a common protocol for commanding electrical devices regardless of the type of electrical device, or by following a particular protocol for each type of electrical device, as a function of data derived from the plurality of environmental sensors (130) and the occupancy rate of each detection zone (601, 602, 603, 604), wherein the plurality of types of electrical devices (20, 30) is selected from lighting, ventilation, air conditioning, door locking and video projection electrical devices,
- the network interface (120) is configured to send data from the plurality of environmental sensors (130) via a network (40), the condition of at least one of the electrical devices (20, 30) in the space (600) and the occupancy rate of each detection zone (601, 602, 603, 604) calculated by the processor (110).

2. The autonomous device (10) for managing a space (600) according to the preceding claim, **characterised in that** the occupancy rate for each presence zone (601, 602, 603, 604) is calculated by the processor (110) by processing images derived from the occupancy sensor (140).

3. The autonomous device (10) for managing a space (600) according to any of the preceding claims, **characterised in that** it is configured to drive an electrical device (20, 30) in a detection zone (600) when the occupancy rate of the detection zone (600) calculated by the processor (110) is greater than a predefined occupancy rate of the detection zone (600).

4. The autonomous device (10) for managing a space (600) according to any of the preceding claims, **characterised in that** it is configured to send, via the network interface (120), the data derived from the environmental sensors (130), the state of at least one of the electrical devices (20, 30) in the space (600) and the occupancy rate periodically.

5. The autonomous device (10) for managing a space (600) according to any of the preceding claims, **characterised in that** the processor (110) is configured to calculate the occupancy rate of each detection zone (601, 602, 603, 604) and to measure the state of at least one of the electrical devices (20, 30) in the space (600) periodically.

6. The autonomous device (10) for managing a space (600) according to any of the preceding claims, **characterised in that** it further comprises a dispensation command (50) configured to control at least one electrical device (20, 30) among the electrical devices.

7. The autonomous device (10) for managing a space (600) according to any of the preceding claims, **characterised in that** it comprises a single housing (100) in which the processor (110) is located, the network interface (120) and to which the plurality of environmental sensors (130) and the at least one occupancy sensor (140) are mounted, the single housing (100) being adapted to be installed in the ceiling of the space, embedded, protruding, suspended or positioned on a cable tray.

8. The autonomous device (10) for managing a space (600) according to any of the preceding claims, **characterised in that** the network interface (120) is an Ethernet interface, a KNX or an LPWAN interface.

9. The autonomous device (10) for managing a space (600) according to any of the preceding claims, **characterised in that** the plurality of environmental sensors (130) comprises at least two sensors from among temperature, air quality, pressure, brightness, humidity and sound sensors.

10. The autonomous device (10) for managing a space (600) according to any of the preceding claims, **characterised in that** the occupancy sensor (140) is an imager.

11. A system comprising an autonomous device (10) for managing a space (600) according to any of the preceding claims and at least one electrical device (20, 30) controlled by the processor (1 10) and in that the electrical device (20, 30) is at least one electrical device from among the lighting (20), ventilation (30), air conditioning, door locking, video projection, socket or shutter devices.

12. The system according to the preceding claim, **characterised in that** the space (600) managed is a space among an office, a meeting room, a co-working room, a toilet block or a shop.
